# EUROPÄISCHE PATENTSCHRIFT

(11) **EP 0 947 370 B1**
(45) Veröffentlichungstag und Bekanntmachung des Hinweises auf die Patenterteilung: **17.08.2005**
(21) Anmeldenummer: 99102653.5
(22) Anmeldetag: 12.02.1999
(51) Int. Cl.: B60K 26/02, G05G 1/14

(54) **Gaspedaleinrichtung für ein Kraftfahrzeug**
Motor vehicle accelerator pedal arrangement
Disposition d'une pédale d'accélérateur pour automobiles

(30) Priorität: 02.04.1998 DE 19814765
(43) Veröffentlichungstag der Anmeldung: 06.10.1999
(73) Patentinhaber: Dr.Ing. h.c.F. Porsche Aktiengesellschaft, 70435 Stuttgart (DE)
(72) Erfinder: Barbunopulos, Vasil, 71665 Vaihingen (DE); Grunke, Edgar, 71254 Ditzingen (DE)

(56) Entgegenhaltungen:
- DE-C- 4 343 681
- GB-A- 1 232 113
- US-A- 2 823 557

## Beschreibung

Die Erfindung bezieht sich auf eine Gaspedaleinrichtung für ein Kraftfahrzeug nach dem Oberbegriff des Anspruchs 1.

Aus der DE 43 43 681 C1 ist eine Gaspedaleinrichtung für ein Kraftfahrzeug, bestehend aus einem zwei Halbschalen umfassenden länglichen Gehäuse bzw. Gehäusebox bekannt, in dem Stelleinrichtungen für eine mechanische Gasbetätigung angeordnet sind. Die Gasbetätigung erfolgt über eine am Gehäuse schwenkbar angelenkte Pedalplatte, die einen Druckhebel aufweist, der mit einer Stelleinrichtung unmittelbar zusammenwirkt. Des weiteren ist aus der DE 44 07 005 C1 eine Fahrpedaleinrichtung bekannt, bei der ein mit einer Fahrpedalplatte gekoppelter, drehbar gelagerter Hebel vorgesehen ist, der eine Betätigungswelle eines Drehsensors antreibt.

Aufgabe der Erfindung ist es, ausgehend von der aus der DE 43 43 681 C1 bekannten Gaspedaleinrichtung diese Gaspedaleinrichtung zum Einsatz eines elektrischen Fahrpedalsensors tauglich zu machen.

Diese Aufgabe wird erfindungsgemäß durch die Merkmale der Ansprüche gelöst. Besondere Ausgestaltungen der Gaspedaleinrichtung sind in weiteren Ansprüchen gekennzeichnet.

Die mit der Erfindung hauptsächlich erzielten Vorteile bestehen darin, daß zur Verwendung des Gehäuses der Gaspedaleinrichtung für eine elektrische oder mechanische Gasbetätigung in den beiden Halbschalen des Gehäuses neben Lagerstellen für zwei Stell-Segmente einer mechanischen Gasbetätigung und eine zusätzliche Lagerstelle für die elektrische Gasbetätigung mit dem außerhalb gelagerten Fahrpedalsensor angeordnet sind. Das Gehäuse ist damit in der Weise ausgebildet, daß es Lagerungen für Stelleinrichtungen sowohl für eine mechanische Gaspedalbetätigung als auch für eine elektrische Gaspedalbetätigung aufweist. D.h. es sind die entsprechenden Lagermöglichkeiten für die beiden Stelleinrichtungen vorgesehen.

Das Gehäuse mit der Stelleinrichtung für eine elektrische Gasbetätigung ist in einfacher Weise vormontierbar. Die Gehäusehälften sind zusammenschraubbar oder klipsbar und die Pedalplatte ist an den Gehäusehälften schwenkbar angelenkt. Zur Betätigung des außenliegenden Fahrpedalsensors ist im Gehäuse als Stelleinrichtung ein Umlenkelement angeordnet, dessen Seilzug eingehängt und mit dem außerhalb des Gehäuses angeordneten elektrischen Fahrpedalsensor verbunden ist.

Eine Betätigung des Fahrpedalsensors erfolgt mittels des Seilzugs, welcher über eine Verschwenkung der aus einem halbkreisförmigen Segment bestehenden Stelleinrichtung erfolgt. Diese ist mit der Pedalplatte über eine Druckstange verbunden.

Das Gehäuse ist in der Weise ausgebildet, daß es Lagerungen für Stelleinrichtungen sowohl für eine mechanische Gaspedalbetätigung als auch für eine elektrische Gaspedalbetätigung aufweist. D.h. es sind die entsprechenden Lagermöglichkeiten für die beiden Stelleinrichtungen vorgesehen.

In vorteilhafter Weise kann auch ein elektrischer Fahrpedalsensor direkt im Gehäuse angeordnet sein, der über eine Stelleinrichtung von der Fahrpedalplatte aus betätigbar ist. Diese Stelleinrichtung besteht in baulich einfacher Weise aus einem mit der Pedallagerplatte verbundenen Hebel, welcher in Eingriff mit einem Betätigungshebel des Fahrpedalssensors steht. Über Federmittel, die redundant ausgebildet sind, wird die Pedalplatte in die Leerlaufstellung gedrückt.

Der Fahrpedalsensor ist in mindestens einer der Halbschalen befestigt und weist eine Steckeinrichtung auf, in die ein Steckelement einsetzbar ist, von dem ein Kabel aus dem Gehäuse heraus geführt wird. Der Sensor sowie das Steckelement sind vormontierbar.

Statt Druckfedern zur Rückstellung der Fahrpedalplatte in eine Leerlaufstellung ist beispielsweise auch ein Blattfederelement denkbar.

Ausführungsbeispiele der Erfindung sind in den Zeichnungen dargestellt und werden im folgenden näher beschrieben.

Es zeigen
- Fig. 1: eine schaubildliche Darstellung der Gaspedalbox mit extern angeordnetem Fahrpedalsensor,
- Fig. 2: eine Gaspedalbox mit Stelleinrichtung in Leerlaufstellung,
- Fig. 3: eine Gaspedalbox mit Stelleinrichtung in Vollaststellung,

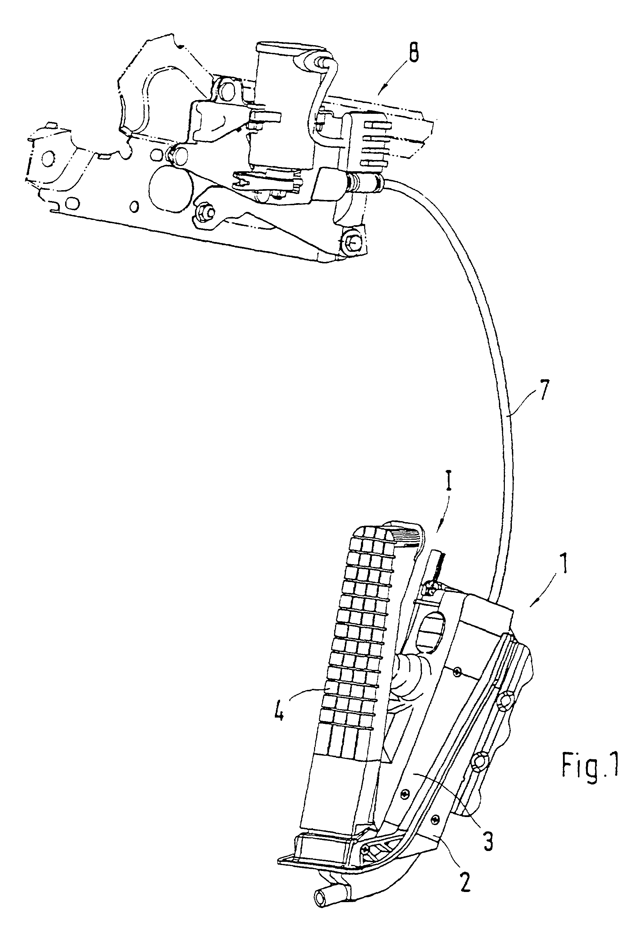

Wie in Fig. 1 näher dargestellt ist, umfaßt die elektrische Gasbetätigung ein Gehäuse 1, aus zwei Halbschalen 2, 3 bestehend mit einer angelenkten Fahrpedalplatte 4, einer innenliegenden Stelleinrichtung 5 sowie einen Seilzug 6 mit einer Hülle 7. Der Seilzug 6 ist mit einem elektrischen Fahrpedalsensor 8 verbunden. Die Gaspedalbox bzw. das Gehäuse 1 ist vormontiert mit dem Fahrzeug verbindbar, wobei der Seilzug spielfrei am Fahrpedalsensor gehalten wird.

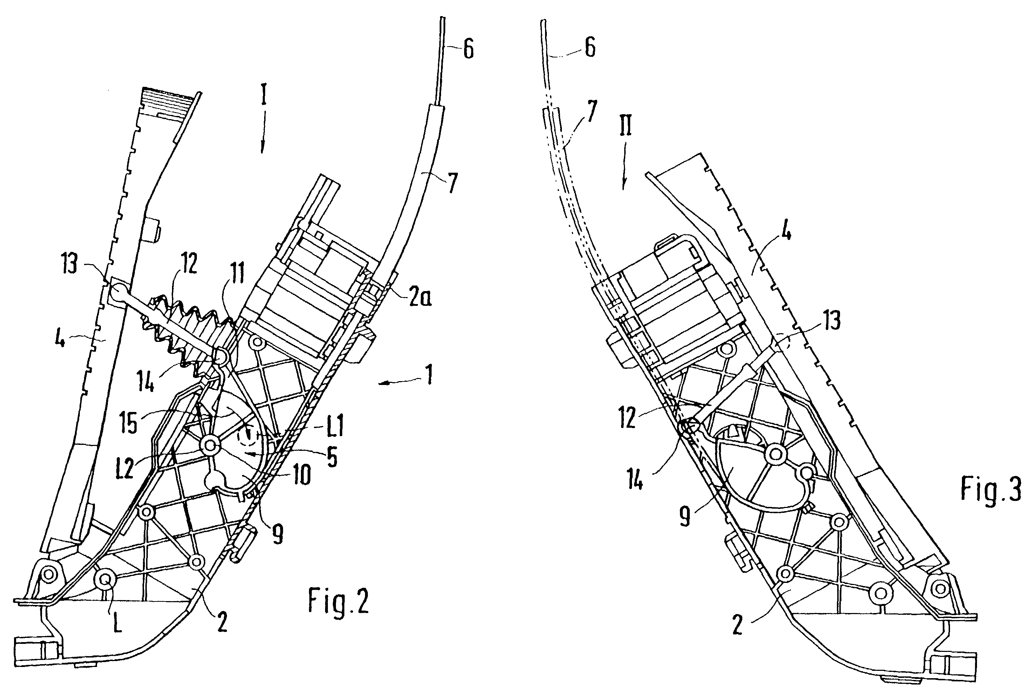

In Fig. 2 ist die eine Halbschale 2 der Gaspedalbox 1 dargestellt, in der die Stelleinrichtung 5, bestehend aus einer halbkreisförmigen Segmentscheibe 9, auf einem Zapfen 10 schwenkbar gelagert. Diese Segmentscheibe 9 weist einen Arm 11 auf, der mit einer Druckstange 12 der Fahrpedalplatte 4 verbunden ist. Die Verbindung erfolgt über Kugelköpfe 13, 14, die in der Pedallagerplatte 4 sowie im Arm 11 schwenkbar angeordnet sind. Mit der Segmentscheibe 9 ist das Seil 6 verbunden. Die Hülle 7 des Seils 6 stützt sich in einer Anformung 2a der Halbschale 2 und 3 ab.

Um das Gehäuses 1 sowohl für eine mechanische oder für die im Ausführungsbeispiel dargestellte elektrische Gasbetätigung nutzen zu können, ist in den beiden Halbschalen 2, 3 des Gehäuses 1 neben Lagerstellen L, L1 für zwei hier nicht gezeigte Stell-Segmente einer mechanischen Gasbetätigung eine zusätzliche Lagerstelle L2 vorgesehen, in der die Segmentscheibe 9 für die dargestellte elektrische Gasbetätigung mit dem außerhalb gelagerten Fahrpedalsensor 8 gelagert ist.

## Patentansprüche

1. Gaspedaleinrichtung für ein Kraftfahrzeug mit
- einer an einer Pedalhalterung in Form eines Gehäuses (1) schwenkbar gelagerten Pedalplatte (4),
- wobei die Pedalhalterung aus einem zwei Halbschalen (2,3) umfassenden länglichen Gehäuse (1) besteht, die fest miteinander verbunden sind und das Gehäuse fertig montiert ins Fahrzeug einsetzbar ist,
- einer mit der Pedalplatte verbundenen Stelleinrichtung (5), die in einer Lagerstelle (L2) im Gehäuse gehalten ist,
- einem kopfseitig des Gehäuses (1) nach oben herausgeführten Seilzug (6), der mit der Stelleinrichtung (5) verbunden ist und dessen Seilhülle (7) sich in einer hülsenartigen Anformung (2a) des Gehäuses abstützt,
**dadurch gekennzeichnet, dass**
- die Stelleinrichtung (5) mit einem elektrischen Fahrpedalsensor (8) verbindbar ist, und
- zur Verwendung des Gehäuses (1) für eine elektrische oder eine mechanische Gasbetätigung in den beiden Halbschalen (2, 3) des Gehäuses (1) zusätzlich zur Lagerstelle (L2) weitere Lagerstellen (L, L1) für zwei Stellsegmente einer mechanischen Gasbetätigung vorgesehen sind.

2. Gaspedaleinrichtung nach Anspruch 1, **dadurch gekennzeichnet, dass** die Stelleinrichtung (5) ein halbkreisförmiges Segment (9) umfaßt, das auf einem Zapfen (10) zwischen den beiden Halbschalen (2, 3) des Gehäuses (1) gehalten ist und das über einen angeformten wegragenden Arm (11) mit einer Druckstange (12) verbunden ist, die endseitig jeweils einen Kugelkopf (13, 14) aufweist, der einerseits im Arm (11) und andererseits in der Pedalplatte (4) gelenkig gelagert ist.

## Claims

1. An accelerator pedal device for a motor vehicle with
- a pedal plate (4) mounted in a pivotable manner on a pedal-holding means in the form of a housing (1),
- wherein the pedal-holding means has an elongate housing (1) comprising two half shells (2, 3) which are connected to each other in a fixed manner, and the housing can be inserted already assembled in the vehicle,
- an adjustment device (5) which is connected to the pedal plate and which is held in a bearing point (L2) in the housing,
- a traction wire (6) which extends upwards at the head end of the housing (1) and which is connected to the adjustment device (5) and the wire cover (7) of which is supported in a sleeve-like portion (2a) moulded integrally on the housing,
**characterized in that**
- the adjustment device (5) can be connected to an electrical accelerator-pedal sensor (8), and
- in order to use the housing (1) for an electrical or a mechanical accelerator actuation, further bearing points (**L**, **L1**) for two adjustment segments of a mechanical accelerator actuation are provided in addition to the bearing point (**L2**) in the two half shells (2, 3) of the housing (1).

2. An accelerator pedal device according to Claim 1, **characterized in that** the adjustment device (5) comprises a semicircular segment (9) which is held on a pin (10) between the two half shells (2, 3) of the housing (1) and which is connected by way of a projecting arm (11) formed integrally thereon to a connecting rod (12), each end of which has a respective spherical head (13, 14) which is mounted in an articulated manner in the arm (11) at one end and in the pedal plate (4) at the other end.

## Revendications

1. Dispositif pour pédale d'accélérateur d'un véhicule automobile comportant
une plaque de pédale (4) montée pivotante sur une fixation de pédale sous la forme d'un boîtier (1),
la fixation de pédale étant constituée d'un boîtier (1) allongé comprenant deux demi-coquilles (2, 3) qui sont reliées fixement entre elles et le boîtier peut être inséré monté fini dans le véhicule,
un dispositif de réglage (5) relié à la plaque de pédale et qui est maintenu dans un point d'appui (L2) du boîtier,
un câble de traction (6) ressortant vers le haut côté tête du boîtier, qui est relié au dispositif de réglage (5) et dont la gaine (7) prend appui dans une formation de type douille (2a) du boîtier,
**caractérisé en ce que**
le dispositif de réglage (5) peut être relié à un capteur électrique (8) de la pédale d'accélération, et
pour l'utilisation du boîtier (1) il est prévu, pour un actionnement électrique ou un actionnement mécanique des gaz, dans les deux demi-coquilles (2, 3) du boîtier (1), outre le point d'appui (L2), d'autres points d'appui (L, L1) pour deux segments de réglage d'un actionnement mécanique des gaz.

2. Dispositif pour pédale d'accélérateur selon la revendication 1, **caractérisé en ce que** le dispositif de réglage (5) comprend un segment (9) en forme de demi-cercle qui est maintenu sur un axe (10) entre les deux demi-coquilles (2, 3) du boîtier (1), et qui est relié, par un bras (11) dépassant, venu de moulage, à une tige de pression (12) qui présente à chaque extrémité une tête sphérique (13, 14) qui est montée articulée d'une part dans le bras (11) et d'autre part dans la plaque de pédale (4).
